# EUROPEAN PATENT SPECIFICATION

(11) **EP 3 889 043 B1**
(45) Date of publication and mention of the grant of the patent: **05.01.2022**
(21) Application number: 20275073.3
(22) Date of filing: 02.04.2020
(51) Int. Cl.: B64C 39/02, B64D 1/08, B64D 1/12

(54) **AIRCRAFT**
LUFTFAHRZEUG
AÉRONEF

(43) Date of publication of application: 06.10.2021
(73) Proprietor: BAE SYSTEMS plc, London SW1Y 5AD (GB)
(72) Inventor: CURWEN, Martin John, Warton, Preston, Lancashire, PR4 1AX (GB)
(74) Representative: BAE SYSTEMS plc Group IP Department

(56) References cited:
- EP-A1- 2 738 093
- EP-A1- 3 489 139
- GB-A- 2 564 777
- KR-A- 20170 140 941
- US-A1- 2012 251 280
- US-A1- 2017 259 918
- US-A1- 2018 072 415

## Description

### FIELD

The present disclosure relates to an aircraft with a detachable payload module.

### BACKGROUND

High altitude long endurance (HALE) unmanned aircraft have been devised. These typically have long wingspans and low drag to improve their ability to operate efficiently for weeks or months at altitudes in excess of 15km.

There are relatively strict weight requirements for the HALE aircraft in order for them to operate for long periods of time at high altitude. As such, many traditional aspects of an aircraft are not included in a HALE aircraft in flight. One such aspect is landing gear, which is designed to separate from the HALE aircraft during take-off to reduce weight.

The return of a HALE Vehicle back to the ground with its payload module intact is hindered by the lack of landing gear.

Therefore, there is a need for an apparatus in which the HALE vehicle and/or payload can be returned to ground in an intact state.

US2018/072415 relates to an unmanned aerial vehicle (UAV) having one or more tool systems which can be decoupled from the UAV. US2017/259918 relates to a dual-aircraft system. The system includes a glider aircraft configured to perform at least one mission objective in a gliding-flight mode during a mission objective stage. The system also includes an unmanned singlecopter configured to couple to the glider aircraft via a mechanical linkage to provide propulsion for the glider aircraft during a takeoff and delivery stage. The unmanned singlecopter can be further configured to decouple from the glider aircraft during a detach stage in response to achieving at least one of a predetermined altitude and a predetermined geographic location to provide the gliding-flight mode associated with the glider aircraft, such that the glider aircraft subsequently enters the mission objective stage.

### SUMMARY

According to a first aspect of the present disclosure, there is provided an aircraft comprising: a fuselage; and a payload module coupled to the fuselage, the payload module comprising one or more data storage devices, wherein the payload module is configured to be decoupled from the fuselage during flight upon receipt of a de-coupling input, characterised by: the aircraft comprising an aerofoil that is covered by the payload module when the payload module is coupled to the fuselage and exposed to oncoming air when the payload module is decoupled from the fuselage.

Decoupling the payload module from the fuselage during flight enables the payload module, which includes one or more data storage devices, to be landed independently of the rest of the aircraft.

In one example, the aircraft includes a de-coupling element configured to decouple the payload module from the fuselage.

The de-coupling element may comprise one or more electromagnets that are configured to couple the payload module to the fuselage when energised, wherein the one or more electromagnets are configured to be de-energised to decouple the payload module from the fuselage upon receipt of a de-coupling input. Electromagnets provide a relatively low weight solution for coupling the payload module to the fuselage and a mechanism for de-coupling the payload module from the fuselage.

In one example, the one or more electromagnets may be configured to provide a holding force of at least 150N when energised to couple the payload module to the fuselage.

In one example, the one or more electromagnets comprises a strip electromagnet that is configured to distribute the load of the payload module across the fuselage. Providing an electromagnet in the form of a strip means that the load may be spread across a relatively larger width and therefore reduces high stress points on the fuselage.

In one example, the de-coupling element comprises an electro-mechanical release mechanism to decouple the payload module from the fuselage upon receipt of a de-coupling input.

The electro-mechanical release mechanism may comprise a pin puller.

The electro-mechanical release mechanism may comprise a separate nut release mechanism.

In one example, the de-coupling element comprises a pyrotechnic hold down and release mechanism, wherein a pyrotechnic impulse is used to decouple the payload module from the fuselage. Pyrotechnic impulses are reliable mechanisms for de-coupling elements during flight.

The aerofoil aids in landing the remainder of the aircraft after the payload module has been de-coupled.

In one example, the aircraft comprises a high altitude long endurance [HALE] aircraft.

In one example, the payload module comprises control avionics for the aircraft.

### BRIEF DESCRIPTION OF THE DRAWINGS

Embodiments of the disclosure will now be described by way of example only and with reference to the accompanying drawings.
Figure 1 is a perspective view of a HALE vehicle;
Figure 2 is a plan view of a HALE vehicle;
Figure 3 is a plan view of a HALE vehicle in which the payload module is decoupled from the fuselage;
Figures 4A to 4C shows an example of a decoupling element; and
Figure 5 is a plan view of a HALE vehicle in which the payload module is decoupled from the fuselage.

For convenience and economy, the same reference numerals are used in different figures to label identical or similar elements.

### DETAILED DESCRIPTION

High altitude aircraft may include a payload module that includes a data storage device, and a fuselage. In some scenarios, the high altitude aircraft jettison the take-off gear during take-off and so it becomes very difficult to land the aircraft in an intact state. The invention enables the payload module 102 to be decoupled from the fuselage 104 during flight, such that the payload module 102 including the data storage device can be safely landed and possibly re-used in future.

Generally, embodiments herein relate to an aircraft and a decoupling element for detaching a payload module from the fuselage of the aircraft.

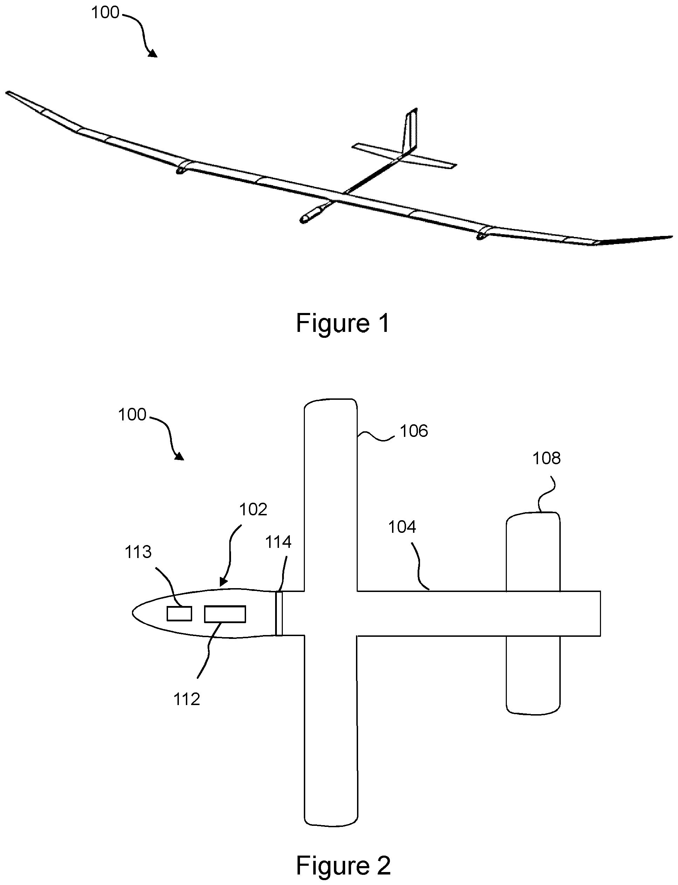

Figure 1 shows an illustrative example of a vehicle 100, specifically a HALE unmanned aeroplane. The present invention is particularly applicable to vehicles that operate with low weight restrictions.

The vehicle 100 includes a wing member 106. In one example, the wingspan of the wing member 106 is approximately 35 metres and has a relatively narrow chord (i.e. of the order 1 metre). The wing member 106 is coupled to a fuselage 104. To aerodynamically balance the vehicle 100, a horizontal tail plane 108 and a vertical tail fin (or vertical stabilizer) 110 are coupled to the rear of the fuselage 104. A payload module 102 is coupled to the front of the fuselage 104, i.e. the nose of the vehicle 100. An engine having a propeller may be mounted to the wing member 106 on both sides of the fuselage 104. The engines may be powered by a combination of solar panels mounted to the upper surfaces of the wing member 106 and batteries disposed inside the fuselage 104 and/or wing member 106.

The vehicle 100 is of lightweight construction. For example, the fuselage 104, wing member 106, payload module 102, tail plane 108 and tail fin 110 may be made of a monocoque carbon fibre laminate skin structure. In other words, the skin forms the aircraft's body. In other embodiments, the body is substantially made of a light weight metal, such as titanium, titanium alloy, aluminium, aluminium alloy. In one example, the body is made substantially of fiberglass.

Figure 2 shows an example of a vehicle 100, such as a HALE aircraft. In figure 2, the payload module 102 includes one or more data storage devices 113. The one or more data storage devices are configured to store data obtained during the flight of the HALE aircraft, for example, data relating to video, images, flight details or other recorded information. The data may be sensitive data, such as intelligence on an adversary. In one example, the payload module 102 includes the control avionics 112 for the aircraft. In one example, the control avionics 112 receives flight control data from an external source and the control avionics 112 uses the received data to control the flight of the aircraft 100. In other examples, the control avionics 112 generates the flight control data in situ.

The vehicle 100 may include a decoupling element 114. The decoupling element 114 may be located between the payload module 102 and the fuselage 104 to enable the payload module 102 to be coupled to the fuselage 104 in a first, flight condition. The decoupling element 114 is also configured to decouple the payload module 102 from the fuselage 104 in the event of a decoupling signal being initiated.

Decoupling the payload module 102 from the fuselage 104 enables the payload module 102, which may contain sensitive equipment such as the one or more data storage devices 113, to be landed separately to the rest of the vehicle 100. For example, the payload module 102 may include one or more parachutes that may be activated following separation from the fuselage 104 such that the payload module 102 can be landed in a safe manner. In other words, the payload module 102 may be decoupled from the fuselage 104 mid-flight and land separately from the rest of the aircraft 100. This is particularly important as there is an increased chance that the one or more data storage devices 113 and/or the control avionics 112, which are part of the payload module 102, may be recovered and reused. In other words, the decoupling aims to avoid damaging sensitive equipment within the payload module 102.

It is desirable to also return the rest of the vehicle 100 to the ground after the payload module 102 has been decoupled. If the vehicle 100, including the payload module 102, were to be brought back to the ground as a single piece, then there is a higher risk that the payload module 102, including sensitive equipment such as the one or more data storage devices 113 and/or control avionics 112, would be damaged during landing as HALE aircraft do not have landing gear.

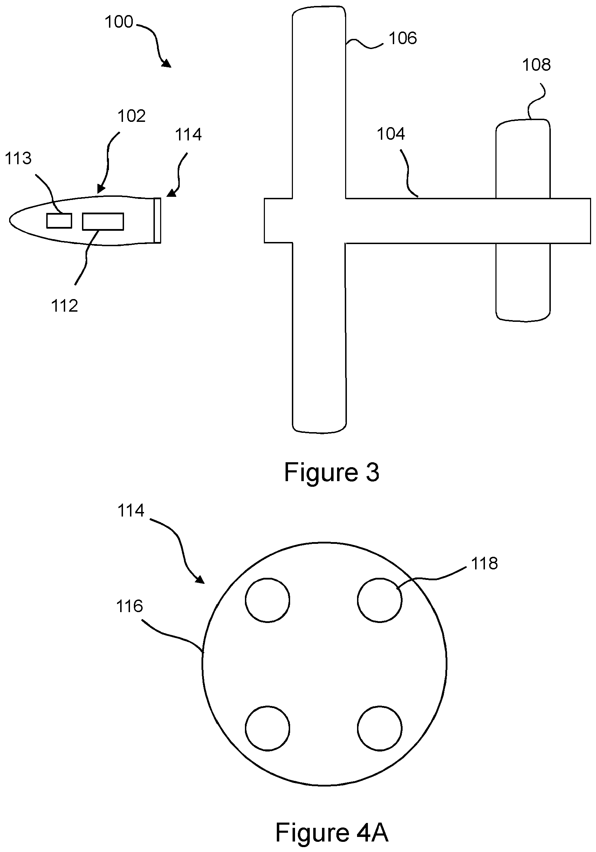

Figure 3 shows an example in which the payload module 102 has been decoupled from the fuselage 104 mid-flight. In this example, the decoupling element 114 has been activated to decouple the payload module 102 from the fuselage 104. Examples of the decoupling element 114 are discussed in more detail below.

During flight, the control avionics 112 may receive a decoupling input to decouple the payload module 102 from the fuselage. The control avionics 112 may be configured to control the decoupling element 114 to decouple the payload module 102 from the fuselage 104.

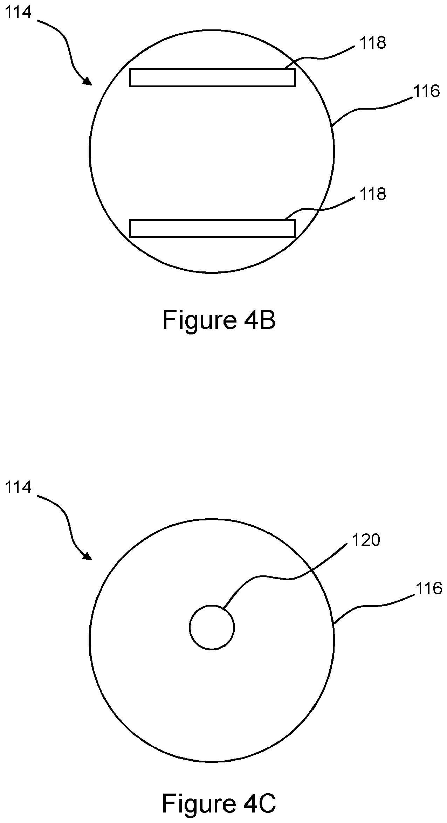

Figure 4 shows an example of the decoupling element 114. In one example, the decoupling element 114 comprises a base plate 116 to which one or more electromagnets 118 are attached. The base plate 116 may be coupled to the payload module 102 or to the fuselage 104.

In this example, the one or more electromagnets 118 may be magnetically coupled with one or more corresponding magnets that are attached to the other one of the payload module 102 and the fuselage 104. In Figure 3, the decoupling element 114 is attached to the payload module 102. In this example, the one or more electromagnets 118 would be coupled with the payload module 102 and magnetically coupled with one or more magnets (not shown) that are attached to the fuselage 104.

In other examples, the baseplate 116 is not required and the electromagnets 118 are directly coupled to the payload module 104 (or the fuselage 102).

To decouple the payload module 102 from the fuselage 104, current is supplied to the electromagnets 118 to stop the neutralizing the magnetic force, thereby dropping the payload module 102 away from the fuselage 104 of the aircraft 100. In other words, the electromagnet 118 may be de-energised to decouple the payload module 102 from the fuselage upon receipt of a de-coupling input.

In operation, the one or more electromagnets 118 may be configured to have a holding force of 150N or above to couple the payload module 102 to the fuselage 104 during flight. More preferably, the one or more electromagnets 118 may be configured to provide a holding force of 250N to account for any aerodynamic forces exerted on the payload module 102 during flight. In one example, the one or more electromagnets 118 may be configured to provide a holding force of 375N.

In one example, the one or more electromagnets 118 have a weight of approximately 0.15Kg. In one example, the one or more electromagnets 118 have a substantially circular cross-section and have a diameter of approximately 32mm.

A decoupling element 114 comprising electromagnets 118 provides a relatively low weight solution to allow aircraft 100, such as HALE vehicle to meet its strict weight requirements.

Figure 4A shows a circular baseplate 116, but other shaped baseplates 116 are envisaged. For example, the baseplate 116 may be substantially rectangular or elliptical. Figure 4 shows four electromagnets 118, but, in practice only one electromagnet 118 may be used.

Figure 4B shows an alternative arrangement of electromagnets 118. In this example, the electromagnets 118 are in the form of strips. As mentioned above, the payload module 102 and the fuselage 104 may be constructed from a relatively lightweight material, such as carbon fibre, which does not respond well to point loads.

Providing an electromagnet 118 in the form of a strip results in a relatively large magnetic coupling area. Increasing the number of attachment points between electromagnets 118 and corresponding magnets will decrease the stress on the payload module 102 as the force is split across more contact points. In one example, the electromagnet 118 comprises a relatively long strip electromagnet that is attached to a relatively large area of the payload module 102. For example, the electromagnet 118 may extend substantially across three quarters of the width of the payload module 102 to spread the loading across the width of the payload module 102. As such, during connection and release, the connection/release forces are distributed over a relatively larger area and so will be less likely to cause damage.

Figure 4C shows an alternative example of the decoupling element 114. In this example, the payload module 102 is secured to the fuselage 104 via one or more electro-mechanical release mechanisms 120. In one example, the electro-mechanical release mechanism 120 comprises a pin puller or a separation nut release mechanism. In these examples, a spool of wire may be released when an electric current is passed through it. Utilising an electro-mechanical release mechanism 120 to couple the payload module 102 to the fuselage 104 provides a one-time release of the payload module 102 from the fuselage 104. Electro-mechanical release mechanism 120 have an operating temperature of between around -150 and 150 degrees Celsius and so are particularly suited for use with a HALE aircraft 100. This removes the need for thermal management of the electro-mechanical release mechanism 120, which is difficult to provide on HALE aircraft due to the thin atmosphere and intense energy coming from the sun. Electro-mechanical release mechanisms 120 are also low shock, as no sudden movements or release of energy occurs. This is important to protect the sensitive electronics that are housed within the payload module 102 and also allows the use of off the shelf components to be used rather than bespoke components. This helps reduce costs of production.

In one example, the decoupling element 114 comprises a pyrotechnic hold down and release mechanism. A pyrotechnic hold down and release mechanism would allow the separation of the payload module 102 by initiating a small pyrotechnic impulse or pressure releasing mated ends of the decoupling element 114. This method of release is extremely reliable.

In each of these examples, the decoupling element 114 is configured to operate in high-altitude environments. For example, in substantially low temperature and at relatively low pressures. In these examples, the payload module 102 may be relatively light (due to 15kg restriction), but also recoverable. This differs from other similar uses (like satellites) where the parts that are separated are not usually recovered on the ground, and do not experience constant aerodynamic forces like drag. These requirements mean a long-term durable solution is needed that does not damage the payload module 102 in anyway.

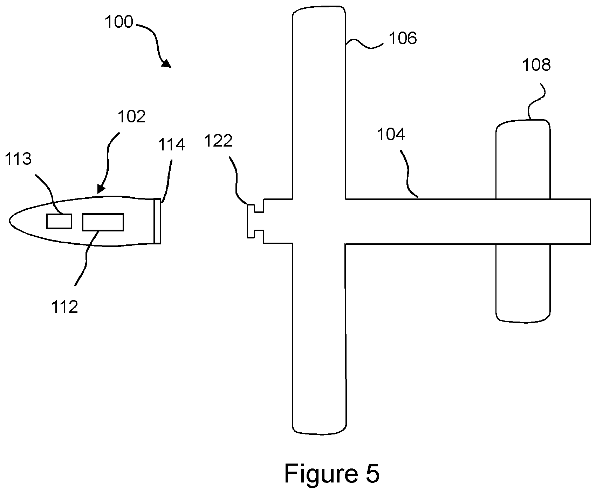

Figure 5 shows an aircraft 100 in which the payload module 102 has been decoupled from the fuselage 104. The fuselage 104 comprises an aerofoil 122 that is covered by the payload module 102 when the payload module 102 is coupled to the fuselage 102 and exposed to oncoming air when the payload module 102 is decoupled from the fuselage 104.

The aerofoil 122 is configured to alter the airflow over the aircraft 100 (with payload module 102 removed), such that the fuselage 104 may be diverted downwards to the ground. The presence of the aerofoil 122 aids with the landing of the aircraft 100 without the payload module 102. As the payload module 102 is removed from the rest of the aircraft, the centre of gravity of the aircraft 100 shifts rearwards, which would cause an upwards pitch of the aircraft. The aerofoil 122 would counter this rear shift and pitch the aircraft 100 down into a declining flight path assisting the landing of the HALE aircraft with the payload module 102 detached.

The payload module 102 and the fuselage 104 may both be safely returned to ground in an intact state. In one example, a de-coupling signal may be sent to the control avionics 112 from a ground source to initiate the decoupling element 114 to decouple the payload module 102 from the fuselage 104.

In other examples, the de-coupling signal may be generated by control avionics 112 to initiate the decoupling element 114 to decouple the payload module 102 from the fuselage 104.

The de-coupling signal may be initiated during flight or alternatively be initiated as during the landing process of the aircraft 100. Intentionally de-coupling the payload module 102 from the fuselage 104 during flight increases the chances that the payload module 102, which may include expensive equipment, can be safely returned to ground, for example by parachute. In some example, the de-coupling signal may be initiated in the event of an emergency such that the payload module 102 may be more likely to be salvaged.

The recovered payload module 102 may be used with another fuselage 104 in a "plug and play" style arrangement.

Reference should be made to the claims for determining the true scope of the present disclosure. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. An aircraft (100) comprising:
a fuselage (104); and
a payload module (102) coupled to the fuselage, the payload module comprising one or more data storage devices (113),
wherein the payload module is configured to be decoupled from the fuselage during flight upon receipt of a de-coupling input,
**characterised by:**
the aircraft comprising an aerofoil (122) that is covered by the payload module when the payload module is coupled to the fuselage and exposed to oncoming air when the payload module is decoupled from the fuselage.

2. The aircraft according to claim 1, comprising a de-coupling element (114) configured to decouple the payload module from the fuselage.

3. The aircraft according to claim 2, wherein the de-coupling element comprises one or more electromagnets (118) that are configured to couple the payload module to the fuselage when energised,
wherein the one or more electromagnets are configured to be de-energised to decouple the payload module from the fuselage upon receipt of a de-coupling input.

4. The aircraft according to claim 3, wherein the one or more electromagnets are configured to provide a holding force of at least 150N when energised to couple the payload module to the fuselage.

5. The aircraft according to claims 3 or 4, wherein the one or more electromagnets comprises a strip electromagnet that is configured to distribute the load of the payload module across the fuselage.

6. The aircraft according to claim 2, wherein the de-coupling element comprises an electro-mechanical release mechanism (120) to decouple the payload module from the fuselage upon receipt of a de-coupling input.

7. The aircraft according to claim 6, wherein the electro-mechanical release mechanism comprises a pin puller.

8. The aircraft according to claim 6, wherein the electro-mechanical release mechanism comprises a separate nut release mechanism.

9. The aircraft according to claim 2, wherein the de-coupling element comprises a pyrotechnic hold down and release mechanism, wherein a pyrotechnic impulse is used to decouple the payload module from the fuselage.

10. The aircraft according to any one of the preceding claims, wherein the aircraft comprises a high altitude long endurance [HALE] aircraft.

11. The aircraft according to any one of the preceding claims, wherein the payload module comprises control avionics for the aircraft.

## Patentansprüche

1. Luftfahrzeug (100), umfassend:
einen Rumpf (104); und
ein Nutzlastmodul (102), das mit dem Rumpf gekoppelt ist, wobei das Nutzlastmodul eine oder mehrere Datenspeichervorrichtungen (113) umfasst;
wobei das Nutzlastmodul so ausgelegt ist, dass es bei Empfang einer Entkopplungseingabe während des Flugs vom Rumpf entkoppelt wird,
**dadurch gekennzeichnet, dass**:
das Luftfahrzeug eine Tragfläche (122) umfasst, die durch das Nutzlastmodul abgedeckt wird, wenn das Nutzlastmodul mit dem Rumpf gekoppelt ist, und entgegenkommender Luft ausgesetzt ist, wenn das Nutzlastmodul vom Rumpf entkoppelt ist.

2. Luftfahrzeug nach Anspruch 1, umfassend ein Entkopplungselement (114), das zum Entkoppeln des Nutzlastmoduls vom Rumpf ausgelegt ist.

3. Luftfahrzeug nach Anspruch 2, wobei das Entkopplungselement einen oder mehrere Elektromagneten (118) umfasst, die so ausgelegt sind, dass sie das Nutzlastmodul bei Erregung mit dem Rumpf koppeln.
wobei der eine oder die mehreren Elektromagneten so ausgelegt sind, dass sie bei Empfang einer Entkopplungseingabe aberregt werden, um das Nutzlastmodul vom Rumpf zu entkoppeln.

4. Luftfahrzeug nach Anspruch 3, wobei der eine oder die mehreren Elektromagneten so ausgelegt sind, dass sie bei Erregung zum Koppeln des Nutzlastmoduls mit dem Rumpf eine Haltekraft von mindestens 150 N bereitstellen.

5. Luftfahrzeug nach Anspruch 3 oder 4, wobei der eine oder die mehreren Elektromagneten einen Streifenelektromagneten umfassen, der so ausgelegt ist, dass er die Last des Nutzlastmoduls über den Rumpf verteilt.

6. Luftfahrzeug nach Anspruch 2, wobei das Entkopplungselement einen elektromechanischen Freigabemechanismus (120) umfasst, um das Nutzlastmodul bei Empfang einer Entkopplungseingabe vom Rumpf zu entkoppeln.

7. Luftfahrzeug nach Anspruch 6, wobei der elektromechanische Freigabemechanismus eine Stiftabziehvorrichtung umfasst.

8. Luftfahrzeug nach Anspruch 6, wobei der elektromechanische Freigabemechanismus einen separaten Mutternlösemechanismus umfasst.

9. Luftfahrzeug nach Anspruch 2, wobei das Entkopplungselement einen pyrotechnischen Niederhalte- und Lösemechanismus umfasst, wobei ein pyrotechnischer Impuls zum Entkoppeln des Nutzlastmoduls vom Rumpf verwendet wird.

10. Luftfahrzeug nach einem der vorhergehenden Ansprüche, wobei das Luftfahrzeug ein Luftfahrzeug mit langer Ausdauer in großer Höhe (HALE) ist.

11. Luftfahrzeug nach einem der vorhergehenden Ansprüche, wobei das Nutzlastmodul Steuerungsavionik für das ein Luftfahrzeug umfasst.

## Revendications

1. Aéronef (100) comprenant :
un fuselage (104) ; et
un module de charge utile (102) couplé au fuselage, le module de charge utile comprenant un ou plusieurs dispositif(s) de stockage de données (113),
dans lequel le module de charge utile est configuré pour être découplé du fuselage pendant le vol lors de la réception d'une entrée de découplage,
**caractérisé par** :
l'aéronef comprenant une surface portante (122) qui est recouverte par le module de charge utile lorsque le module de charge utile est couplé au fuselage et exposé à l'air venant en sens inverse lorsque le module de charge utile est découplé du fuselage.

2. Aéronef selon la revendication 1, comprenant un élément de découplage (114) configuré pour découpler le module de charge utile du fuselage.

3. Aéronef selon la revendication 2, dans lequel l'élément de découplage comprend un ou plusieurs électroaimant(s) (118) qui est/sont configuré(s) pour coupler le module de charge utile au fuselage lorsqu'il est sous tension,
dans lequel le ou les électroaimant(s) est/sont configuré(s) pour être mis hors tension afin de découpler le module de charge utile du fuselage lors de la réception d'une entrée de découplage.

4. Aéronef selon la revendication 3, dans lequel le ou les électroaimant(s) est/sont configuré(s) pour fournir une force de maintien d'au moins 150 N lorsqu'ils sont mis sous tension afin de coupler le module de charge utile au fuselage.

5. Aéronef selon la revendication 3 ou 4, dans lequel le ou les électroaimant(s) comprend/comprennent un électroaimant à bande qui est configuré pour répartir la charge du module de charge utile au sein du fuselage.

6. Aéronef selon la revendication 2, dans lequel l'élément de découplage comprend un mécanisme de libération électromécanique (120) destiné à découpler le module de charge utile du fuselage lors de la réception d'une entrée de découplage.

7. Aéronef selon la revendication 6, dans lequel le mécanisme de libération électromécanique comprend un rétracteur.

8. Aéronef selon la revendication 6, dans lequel le mécanisme de libération électromécanique comprend un mécanisme de libération à écrou distinct.

9. Aéronef selon la revendication 2, dans lequel l'élément de découplage comprend un mécanisme de retenue et de libération pyrotechnique, dans lequel une impulsion pyrotechnique est utilisée pour découpler le module de charge utile du fuselage.

10. Aéronef selon l'une quelconque des revendications précédentes, dans lequel l'aéronef comprend un aéronef de type HALE [High Altitude Long Endurance].

11. Aéronef selon l'une quelconque des revendications précédentes, dans lequel le module de charge utile comprend un système avionique de commande pour l'aéronef.
